# EUROPÄISCHE PATENTSCHRIFT

(11) **EP 3 303 851 B1**
(45) Veröffentlichungstag und Bekanntmachung des Hinweises auf die Patenterteilung: **06.11.2019**
(21) Anmeldenummer: 16728218.5
(22) Anmeldetag: 25.05.2016
(51) Int. Cl.: F16B 2/24, F16B 5/12, F16B 21/08

(54) **VORRICHTUNG ZUM HALTEN EINES BAUTEILS**
DEVICE FOR FASTENING A COMPONENT
DISPOSITIF POUR FIXER UN COMPOSANT

(30) Priorität: 29.05.2015 DE 102015209881
(43) Veröffentlichungstag der Anmeldung: 11.04.2018
(73) Patentinhaber: A. RAYMOND et Cie, 38000 Grenoble (FR)
(72) Erfinder: SCHULZ, Stefan, 79540 Lörrach (DE); LINDGENS, Marcel, 79585 Steinen (DE); POUZOLS, Virginie, 68330 Huningue (FR)
(74) Vertreter: Tilmann, Max Wilhelm
(86) Internationale Anmeldenummer: PCT/EP2016/000864
(87) Internationale Veröffentlichungsnummer: WO 2016/192840

(56) Entgegenhaltungen:
- WO-A1-2011/101207
- WO-A1-2012/104250
- US-A1- 2011 314 646

## Beschreibung

Die Erfindung betrifft eine Vorrichtung zum Halten eines Bauteils, wobei die Vorrichtung einen Clip umfasst, der einen Kopf und eine oder mehrere Clipflächen für eine Anlage an dem zu haltenden Bauteil oder einem Element, an dem das Bauteil gehalten werden soll, umfasst, wobei die Clipfläche dem Kopf zugewandt und zum Kopf beabstandet ist.

Als Befestigungsvorrichtung, die eine Klemmkraft auf zu haltende bzw. zu verbindende Bauteile ausüben können, sind Schrauben mit auf einem Gewindestift der Schraube aufgeschraubten Muttern bekannt, bzw. Schrauben, die in eine Gewindebohrung eingeschraubt werden. Die miteinander zu befestigenden Verbindungsteile bzw. das zu haltende Bauelement werden zwischen dem Kopf der Schraube und der auf den Gewindestift aufgeschraubten Mutter angeordnet. Schraubverbindungen haben jedoch den Nachteil, dass sie einen relativ zeitaufwendigen Befestigungsvorgang erfordern. Zudem muss in der Regel ein Zugriff auf beide Seiten des zu verbindenden Bauteils ermöglicht werden, um sowohl Zugriff auf den Kopf der Schraube als auch auf die Mutter zu haben. Beispielsweise muss auch eine Schraube mehrfach gedreht werden, bis diese in eine Gewindebohrung tief genug eingeschraubt ist. Bei Durchsteckschrauben ist es erforderlich, das Stiftende mit einer Mutter zu versehen und bei Stiftschrauben oft auch das andere Stiftende. Bei einer Vielzahl von Schraubverbindungen summiert sich dabei die Montagezeit enorm.

Ferner sind als Befestigungsvorrichtungen Clips beispielsweise aus WO 2012/104250 A1 bekannt.

Ein aus WO 2012/104250 A1 bekannter Clip weist einen Kopf mit einer Kopfkontaktfläche auf. Von dem Kopf aus erstreckt sich ein Schaft entlang einer Längsachse. Der Schaft weist ein Befestigungsende mit einer Kontaktfläche auf, die der Kopfkontaktfläche gegenüberliegt. Die mit der Befestigungsvorrichtung zu verbindenden Verbindungsteile werden zwischen der Kopfkontaktfläche und der Kontaktfläche des Schafts (Clipfläche) angeordnet, wobei der Schaft eine in den Verbindungsteilen bzw. dem Bauteil vorgesehene Öffnung durchgreift. Dabei ist es vorgesehen, dass die Clipfläche auf einem gefederten Element des Schafts ausgebildet ist. Die Federkraft spannt das Element vor in eine Richtung von der Längsachse des Schafts weg. Dies erlaubt es, den Schaft des Clips durch die Öffnung des Bauteils zu führen, wobei dabei das federbelastete Element entgegen der Federkraft auf die Längsachse des Schafts hin bewegt wird und damit der Umfang des Schafts im Bereich der Clipfläche reduziert wird. Nach Durchtreten der Öffnung bewegt sich das federbelastete Element in seine Ausgangsstellung zurück und erweitert dabei den Umfang des Schaftes. Dadurch wird verhindert, dass der Schaft wieder durch die Öffnung gezogen werden kann. Nachteilig an den bekannten Clips ist, dass derartige Clips keine Klemmkraft erzeugen können.

Aus DE 201 07 949 U1 ist eine Steckkupplung zum lösbaren Verbinden eines ersten Bauteils mit einem zweiten Bauteil bekannt. Die Steckkupplung weist einen elastisch verformbaren pfannenartigen Kupplungsteil mit einem an dem ersten Bauteil festgelegten Befestigungsabschnitt und einer daran angeformten Kugelpfanne und einen elastisch verformbaren kugelartigen Kupplungsteil mit einem an dem zweiten Bauteil festgelegten Befestigungsabschnitt, einem in der Kugelpfanne einschnappbaren Kugelkopf und einem zwischen dem Befestigungsabschnitt und dem Kugelkopf liegenden Zwischenabschnitt auf. Die Kugelpfanne des pfannenartigen Kupplungsteils ist an ihrer Außenseite mit mehreren in Umfangsrichtung verteilten Ausnehmungen versehen. Auch diese Steckkupplung weist den Nachteil auf, dass ein Zugriff auf beide Seiten des zu haltenden bzw. zu verbindenden Bauteils von beiden Seiten nötig ist.

US 6 267 543 B1 offenbart eine Bajonettverriegelung zur Befestigung einer ersten Platte an einer zweiten Platte. Die Bajonettverriegelung umfasst ein schraubenförmiges Element, das drehbar in Eingriff in der zweiten Platte gebracht werden kann und ferner einen Raststift, der in Eingriff mit der ersten Platte gebracht werden kann, um das schraubenförmige Element zu sichern. Nachteilig bei der aus der US 6 267 543 B1 bekannten Bajonettverriegelung ist die Handhabung, die die genaue Ausrichtung und ein nachfolgendes Einsetzen sowie Drehen des schraubenförmigen Elements erfordert. Die an der ersten und zweiten Platte vorgesehenen Öffnungen zum Durchtritt des schraubenförmigen Elements müssen speziell zueinander ausgerichtet sein und eine an das schraubenförmige Element angepasste Form aufweisen. US 4 262 394 A offenbart auch eine Bajonettverriegelung zur Befestigung zweier plattenförmiger Bauteile.

US 3 217 585 offenbart eine Befestigungsvorrichtung in Form einer Käfigmutter, die im Wesentlichen aus einem Blechkäfig besteht. Der Blechkäfig kann auf einem Träger befestigbar sein. Der Käfig hält eine Mutter in Durchbrüchen, die in parallelen, nach oben weisenden Flanschen ausgebildet sind. In einer rechtwinklig zur Ebene der Flansche angeordneten Ebene sind kurvenförmig nach oben gerichtete Bogenstücke angeordnet, die axial zu den betreffenden Seiten des Körpers angeordnet sind und nach oben bis auf eine Höhe vorstehen, die gleich oder größer als die Höhe der Flansche ist. Die Bogenstücke sind als offene Bögen ausgebildet und dienen als Federelemente oder Energiespeicher, um ein federndes Biegen zu erzielen. Nachteilig bei der aus der US 3 217 585 A bekannten Befestigungsvorrichtung ist ebenfalls, dass es sich um eine Schraubverbindung handelt, bei der ein Zugriff von beiden Seiten des zu haltenden Bauteils gewährleistet sein muss, um die Befestigung durchführen zu können.

WO 2012/104250 A1 betrifft eine Befestigungsvorrichtung zum Verbinden eines Anbauteiles an einem Trägerteil. Die Befestigungsvorrichtung weist eine Deckplatte sowie an die Deckplatte angeformte Seitenwände auf, die ein U-förmiges Profil bilden. An Schaftarmen sind einander gegenüberliegende Randflügel sowie an Abstützkanten abgestützte Abstützwangen vorhanden. Dadurch ergibt sich ein sehr steifer, blockartiger Aufbau der Befestigungsvorrichtung, die gegen sehr hohe Auszugskräfte sehr widerstandsfähig ist.

Der Erfindung liegt daher die Aufgabe zugrunde, eine Vorrichtung zum Halten eines Bauteils zu schaffen, mit der eine Klemmkraft zwischen den zu befestigenden bzw. zu haltenden Bauteilen erzeugbar ist und die einfach handhabbar ist.

Die Aufgabe wird durch den Gegenstand des Anspruchs 1 gelöst. Vorteilhafte Ausführungsformen sind in den Unteransprüchen und der nachfolgenden Beschreibung angegeben.

Die Erfindung geht von dem Grundgedanken aus, mittels eines an einem Clip angeordneten weiteren Elements oder Vorrichtungsteils in Form eines Klemmteils eine Kontaktfläche vorzusehen, die in Richtung der Clipfläche vorgespannt ist. Zwischen Clipfläche und Kontaktfläche des Klemmteils kann ein Bauteil gehalten werden. Die Vorspannung kann dabei derart genutzt werden, dass das Bauteil zwischen Clipfläche und Kontaktfläche des Klemmteils geklemmt wird und insbesondere eine Bewegung des gehaltenen Bauteils entlang einer mittleren Achse des Clips, insbesondere entlang der Längsachse eines Schafts des Clips, relativ zum Clip verhindert ist. Eine an einem Trägerteil befestigte erfindungsgemäße Vorrichtung, die den Clip und das Klemmteil aufweist, klemmt damit das zu haltende Bauteil relativ zum Trägerteil und verhindert insbesondere eine Bewegung in Längsrichtung des Schafts des Clips weg vom Trägerteil.

Die Vorrichtung zum Halten eines Bauteils umfasst einen Clip, der einen Kopf und eine oder mehrere Clipflächen für eine Anlage an dem zu haltenden Bauteil oder einem Element, an dem das Bauteil gehalten werden soll, umfasst. Die Clipfläche ist dem Kopf zugewandt und zum Kopf beabstandet. Ferner umfasst die Vorrichtung ein Klemmteil, das den Kopf von der Seite des Kopfes, der der Clipfläche zugewandt ist, unterstützt oder das mit dem Kopf verbunden ist. Das Klemmteil umfasst eine Kontaktfläche, die der Clipfläche zugewandt ist, und ferner umfasst die Vorrichtung eine Feder, die derart angeordnet ist, um die Kontaktfläche vom Kopf weg in Richtung der Clipfläche vorzuspannen.

Der Begriff "Halten" des Bauteils umfasst die Eignung der Vorrichtung mit dem Bauteil verbunden zu werden und insbesondere die Eignung der Vorrichtung, die an einem Trägerteil befestigt sein kann, das Bauteil relativ zu dem Trägerteil zu halten. In Bezug auf die mit dem Trägerteil verbundene Vorrichtung umfasst der Begriff "Halten" das Verhindern einer Bewegung des Bauteil in Bezug auf das Trägerteil im Bereich der Vorrichtung, insbesondere eine Bewegung entlang der Schaftachse des Clips der Vorrichtung im Bereich der Vorrichtung in beide Richtungen. Die Vorrichtung kann mit dem Kopf des Clips an einem Trägerteil befestigt, insbesondere verschweißt, sein.

Der Clip kann sich durch eine Montageausnehmung des zu haltenden Bauteils zumindest teilweise erstrecken. Die Montageausnehmung kann im Wesentlichen eine der Außenkontur des Clips angepasste Form aufweisen, die im Wesentlichen rechteckförmig sein kann.

Der Begriff "Bauteil" im Sinne der Erfindung umfasst beispielsweise ein Paneel oder eine Platte zur Befestigung an einer Fahrzeugkarosserie, insbesondere einem Karosserieblech. Bei einem Bauteil im Sinne der Erfindung kann es sich auch um ein Tür-Modul, Scheibenwischermotor-Modul oder Ersatzrad-Modulhandeln.

Der Begriff "zugewandt" im Sinne der Erfindung in Bezug auf zwei Flächen bzw. Abschnitte zweier Flächen umfasst, dass die Flächennormalen der betrachteten Flächen oder Abschnitte der Flächen einen Winkel von kleiner 45° miteinander einschließen.

Der Begriff "in Richtung" in Bezug auf eine Bewegung umfasst im Sinne der Erfindung eine Bewegung, die eine Richtungskomponente aufweist, die zur Richtung parallel ist. Nicht notwendigerweise wird unter dem Begriff "in Richtung" nur eine rein translatorische Bewegung in dieser einen Richtung verstanden.

Bei einer "Feder" im Sinne der Erfindung kann es sich insbesondere um ein Element handeln, das unter Belastung nachgibt und nach Entlastung in die ursprüngliche Gestalt zurückkehrt, sich also insbesondere elastisch rückstellend verhalten kann. Die Federeigenschaften können durch das verwendete Material, welches bevorzugt Federstahl sein kann, und die Geometrie der Feder beeinflusst bzw. bestimmt werden. Das Wirkprinzip kann dem Wirkprinzip einer Blattfeder für eine LKW-Federung entsprechen. Eine Feder kann in eines der Elemente, insbesondere in das Klemmteil oder den Clip, durch Prägen oder Ziehen eingebracht werden.

Sofern der Begriff "ein" und entsprechend grammatikalische Anpassungen an das Genus des dem Begriff nachfolgenden bezeichneten Elements in der Beschreibung und den Ansprüchen verwendet wird, so umfasst dieser Begriff die Einzahl und die Mehrzahl des jeweils bezeichneten Elements. Der Begriff "ein" und entsprechende grammatikalische Anpassungen an das dem Begriff nachfolgenden bezeichneten Element schließt in der Regel das Vorsehen mehrerer der Elemente nicht aus.

Vorzugsweise ist der Kopf relativ zur Kontaktfläche durch Verformen der Feder in einer Richtung, in der die Vorspannung vergrößert ist, bewegbar. Die Verwendung einer Feder stellt ein besonders einfaches Mittel dar, um die Klemmkraft, die mittels einer Bewegung des Kopfes relativ zur Kontaktfläche, die in die Aufstandsfläche des Klemmteils am zu haltenden Bauteil sein kann, zu bewegen. Die Feder kann aus einem Federstahl ausgeformt sein, der aus seiner Normallage ausgelenkt bzw. gebogen ist, so dass er in die Normallage zurückfedern kann.

Erfindungsgemäß weist die Vorrichtung ein lösbares Haltemittel auf, das den Kopf in einer ersten Position relativ zur Kontaktfläche hält, wobei die Feder in einer Richtung verformt ist, in der die Vorspannung vergrößert ist, wenn der Kopf in dieser ersten Position im Vergleich zu einer zweiten Position ist, die der Kopf relativ zu der Kontaktfläche einnehmen kann. Hierdurch kann ermöglicht werden, dass die Vorrichtung zunächst, wie bei einem Clip gewohnt, gehandhabt werden kann, ohne dass eine Klemmkraft zwischen Clipfläche und Kontaktfläche vorliegt. Das Klemmteil kann gegenüber dem Clip in einer Bewegungsrichtung entlang einer Verbindungsachse zwischen Clipfläche und Kontaktfläche vorgespannt sein, wobei aber der Clip zusammen mit dem Klemmteil in der sonst für den Clip üblichen Weise gehandhabt werden kann.

In einer bevorzugten Ausführungsform weist das Haltemittel eine Nase auf, die von einer Kontaktposition, in der sie den Kopf kontaktiert und den Kopf in der ersten Position hält, in eine Freigabeposition, in der sie den Kopf nicht länger hält, bewegbar ist. Das als Nase ausgestaltete Haltemittel kann die Vorspannung zwischen Klemmteil und Clip in der ersten Position aufrecht halten. Das als Nase ausgestaltete Haltemittel kann in eine Freigabeposition gebracht werden, in der die Vorspannung wirkt und die Kontaktfläche des Klemmteils vom Kopf weg in Richtung der Clipfläche bewegt wird. Ein als Nase ausgestaltetes Haltemittel kann effektiv den Clip kontaktieren und dennoch auf ein Minimum an Masse und Volumen reduziert sein, um Gewicht und Kosten gering zu halten. Ferner kann ein derartiges Haltemittel als Vorsprung einfach hergestellt werden.

Vorzugsweise weist der Clip einen Schaft auf, der mit dem Kopf verbunden ist, und der Schaft weist einen Vorsprung auf, auf der eine Fläche die Clipfläche des Clips bildet. Der Schaft kann das zu haltende Bauteil zumindest teilweise durchgreifen. Der Schaft kann insbesondere starr ausgebildet sein. Der Schaft kann sich zumindest teilweise durch eine Öffnung des zu haltenden Bauteils erstrecken. Die Clipfläche ist an dem Schaft angeordnet und kann sich beispielsweise insbesondere in einem Winkel zum Schaft im Bereich von 45° bis 135° erstrecken. Die Clipflächen können sich von dem Schaft fort erstrecken, wobei der Vorsprung an dem Schaft elastisch, beispielsweise mittels Verwendung einer Feder, zu diesem angeordnet ist. Der Vorsprung kann in einem Fenster des Schafts elastisch in den Schaft einfedern, um den Umfang beispielsweise beim Einführen der Vorrichtung durch eine Öffnung des zu haltenden Bauteils zu verringern. Nach Durchtritt durch die Öffnung des zu haltenden Bauteils kann der Vorsprung wieder aus dem Fenster austreten. Eine Flächennormale der Clipfläche kann insbesondere im Wesentlichen parallel zur Längsachse des Schafts verlaufen, der Winkel zwischen einer Flächennormalen der Clipfläche und der Längsachse des Schafts kann bevorzugt im Bereich von ungefähr 0° bis ungefähr 45° liegen.

In einer bevorzugten Ausführungsform weist der Klemmteil zwei voneinander beabstandete Federn auf, die derart angeordnet sind, um die Kontaktfläche von dem Kopf weg in Richtung auf die Clipfläche vorzuspannen. Hierdurch kann die Anzahl der zu handhabenden Elemente verringert sein, indem die Feder(n) Teil des Klemmteils ist/sind, und ermöglicht werden, dass die Klemmkraft möglichst homogen verteilt ist, indem beispielsweise zwei zu einer Durchtrittsöffnung am Klemmteil für den Clip bzw. den Schaft des Clips symmetrisch angeordnete Federn vorgesehen sind, so dass die Klemmkraft auf die durch die Durchtrittsöffnung am Klemmteil oder in dem zu haltenden Bauteil gebildeten Seiten erzeugt werden kann. Das Halten und Klemmen des Bauteils kann verbessert werden. Es kann eine Symmetrie der Klemmkraft erzeugt und ein Verkanten oder Verkippen des zu haltenden Bauteils vermieden werden. Mehrere Federn, insbesondere zwei, können eine Klemmkraftsymmetrie in Bezug auf den Clip bzw. den Schaft des Clips erzeugen.

Der Begriff "Symmetrie" bzw. symmetrisch im Sinne der Erfindung kann eine Symmetrie bezüglich einer oder mehrerer Achsen oder eine Symmetrie bezüglich eines Punktes umfassen, wobei geringfügige Abweichungen von der reinen geometrischen Symmetrie umfasst sein sollen, die keine wesentliche Beeinträchtigung der Funktion bewirkt.

In einer bevorzugten Ausführungsform ist der Clip lösbar an dem Klemmteil befestigt, so dass eine einfach zu handhabende Vorrichtung geschaffen wird, die keine komplizierte und in einem weiteren Verfahrensschritt zur Herstellung der Vorrichtung auszuführende Befestigung zwischen Clip und Klemmteil erfordert. Clip und Klemmteil können zusammengesteckt sein. Der Clip kann in Richtung der Federkraft auf dem Klemmteil aufliegen bzw. an dem Klemmteil anliegen, sofern zwischen Klemmteil und Clip bzw. an dem Klemmteil die Feder ausgebildet ist. Die Federkraft kann damit den Clip drücken.

Es kann auch vorgesehen sein, dass der Klemmteil mit dem Clip verbunden, insbesondere verschweißt, vorzugsweise punktverschweißt, ist, um eine feste Verbindung vorzusehen, die eine Stabilisierung in der Bewegung zwischen Clip und Klemmteil bewirken kann. Ein Verkippen und/oder Verkanten des Clips relativ zum Klemmteil kann vermieden werden. Es ist möglich, dass der Clip mit dem Klemmteil derart verbunden, insbesondere verschweißt, ist, dass der Clip in Richtung der Federkraft hinter dem Klemmteil angeordnet ist, so dass der Clip von der Feder gezogen werden kann.

Vorzugsweise ist mehr als eine Kontaktfläche vorgesehen, um die Klemmkraft symmetrisch oder homogen auf das Bauteil aufbringen zu können. Die mehreren Kontaktflächen können im Wesentlichen symmetrisch in Bezug auf einen Teil des Klemmteils angeordnet sein. Das Klemmteil kann seinerseits symmetrisch zum Clip angeordnet sein. Bevorzugt ist das Klemmteil symmetrisch zum Schaft des Clips angeordnet und der Schaft in einer Durchgangsöffnung des Klemmteils angeordnet. Hierdurch kann ermöglicht werden, dass das Bauteil möglichst homogen gehalten und auch eine homogene Klemmkraft auf das Bauteil ausgeübt werden kann. Die Kontaktfläche kann eine gebogene Form aufweisen, wodurch der Kontakt mit dem zu haltenden Bauteil verbessert werden kann.

In einer bevorzugten Ausführungsform sind vier Kontaktflächen vorgesehen, die insbesondere im Wesentlichen symmetrisch zur Durchtrittsöffnung für den Schaft des Clips angeordnet sein können. Eine Punktsymmetrie zum Mittelpunkt der Durchtrittsöffnung ist ebenso bevorzugt wie eine einfache oder doppelte Achsensymmetrie zu der bzw. den Mittellinien der Durchtrittsöffnung.

In einer bevorzugten Ausführungsform ist der Clip einstückig aus einem Metallblech erzeugt, wobei Abschnitte des Metallblechs relativ zueinander gebogen sind, um dem Clip seine dreidimensionale Form zu geben und/oder das Klemmteil ist einstückig aus einem Metallblech erzeugt, wobei Abschnitte des Metallblechs relativ zueinander gebogen sind, um dem Klemmteil seine dreidimensionale Form zu geben. Clip und/oder Klemmteil können aus einem Metallblech mittels eines Stanz-Biege-Prozesses hergestellt sein. Hierdurch kann auf aufwendige Verbindungsprozesse, wie zum Beispiel Schweißen, verzichtet werden, um Clip und/oder Klemmteil herzustellen.

In einer bevorzugten Ausführungsform ist das Klemmteil einstückig aus einem Metallblech erzeugt, wobei Abschnitte des Metallblechs relativ zueinander gebogen sind, um dem Klemmteil seine dreidimensionale Form zu geben und das Haltemittel umfasst einen aufwärts gebogenen Teil eines Metallblechs, der den Kopf des Clips überragt, wobei der aufwärts gebogene Teil des Metallblechs eine nach innen gebogene Nase aufweist, die den Kopf kontaktiert und den Kopf in einer ersten Position hält. Hierdurch kann der Zugriff auf das Haltemittel verbessert werden. Das Haltemittel kann von oben, da es den Clip höhenmäßig überragt, gelöst werden.

Die Erfindung wird nachfolgend anhand von Zeichnungen, die Ausführungsformen der Erfindung zeigen, näher erläutert. Darin zeigt
- Fig. 1:: eine isometrische Darstellung eines Clips einer Vorrichtung zum Halten eines Bauteils gemäß einer ersten Ausführungsform;
- Fig. 2:: eine isometrische Darstellung eines Klemmteils einer Vorrichtung zum Halten eines Bauteils gemäß einer ersten Ausführungsform;
- Fig. 3:: die Vorrichtung zum Halten eines Bauteils gemäß einer ersten Ausführungsform;
- Fig. 4:: eine isometrische Darstellung eines Clips einer Vorrichtung zum Halten eines Bauteils gemäß einer zweiten Ausführungsform;
- Fig. 5:: eine isometrische Darstellung eines Klemmteils einer Vorrichtung zum Halten eines Bauteils gemäß einer zweiten Ausführungsform; und
- Fig. 6:: die Vorrichtung zum Halten eines Bauteils gemäß einer zweiten Ausführungsform.

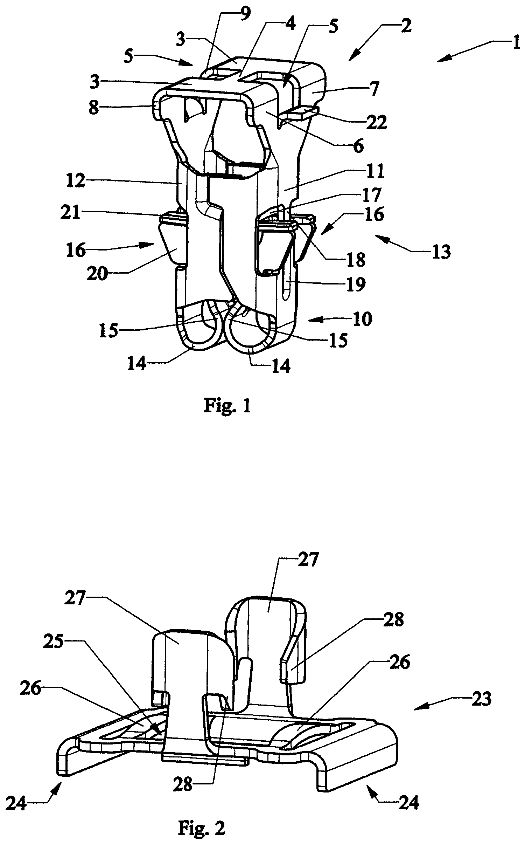

Fig. 1 zeigt in einer isometrischen Ansicht ein aus einem Metallblech mit einem Stanz-Biege-Prozess hergestellten Clip 1 eines ersten Ausführungsbeispiels einer Vorrichtung zum Halten eines Bauteils. Der Clip 1 gemäß Fig. 1 weist im Bereich eines Kopfes 2 zwei flache Kopfstege 3 auf, die im Wesentlichen eine rechteckige Gestalt haben. Die Kopfstege 3 sind mittels eines Verbindungssteges 4 verbunden. Zwischen den beiden Kopfstegen 3 und dem Verbindungssteg 4 sind Kopfausnehmungen 5 ausgebildet. An den Längsrändern der Kopfstege 3 sind Seitenwände 6, 7, 8, 9 angeformt, die im Wesentlichen rechtwinklig zu dem jeweiligen Kopfsteg 3 ausgerichtet sind. Jeweils zwei der Seitenwände 6, 7und 8, 9 bilden zusammen mit einem Kopfsteg 3 ein U-förmiges Profil, welches im Bereich des Kopfes 2 zu einer hohen Steifigkeit führen kann. An die Seitenwände 6, 7 schließt sich ein in einen Fußbereich 10 erstreckender Schaftarm 11 an. An die Seitenwände 8, 9 schließt sich ein in Richtung des Fußbereiches 10 erstreckender Schaftarm 12, der dem Schaftarm 11 gegenüberliegt, an. Im Fußbereich 10 gehen die Schaftarme 11, 12, die einen Schaft 13 bilden, über in Umbiegeabschnitte 14, mit denen je ein Abschnitt 15 in den Schaft 13 rückgeführt wird. Durch die Breite eines Umbiegeabschnitts 14 können die Federeigenschaften des Abschnitts 15 einstellbar sein, wobei zudem eine Sicke im Abschnitt 15 zur Versteifung desselben ausgebildet sein kann.

An jedem Abschnitt 15 ist ein Paar von Vorsprüngen 16 angeformt, die sich in der in Fig. 1 dargestellten Anordnung, die eine relaxierte Anordnung des Clips darstellt, durch im Mittenbereich des Schafts 13 geformte Fenster 17 über den Schaft 13 hinaus nach außen erstrecken. Zwischen den Fenstern 17 des Schafts 13 verbleibt ein Steg 18, in dessen Flucht jeweils eine Sicke 19 zum Versteifen des betreffenden Schaftbereichs geformt ist. Jeder Vorsprung 16 ist aus einem sich seitlich in Längsrichtung des Schaftarmes 11, 12 erstreckenden sowie an den Abschnitt 15 angebundenen Seitenabschnitt 20 und einen im Wesentlichen rechtwinklig zu dem Seitenabschnitt 20 ausgerichteten sowie über eine Abwinklung mit dem betreffenden Seitenabschnitt 20 verbundenen Clipfläche 21 gebildet. Die Clipflächen 21 erstrecken sich aufeinander zu. Die nach außen gerichteten Außenkanten der Seitenabschnitte 20 sind in Richtung des Fußabschnittes 10 angeschrägt, um ein Einführen der Schaftarme 11, 12 bzw. des Schafts 13 durch an deren Querschnitt angepasste Montageausnehmungen mit relativ geringen Montagekräften zu ermöglichen.

Zwischen den Seitenwänden 6, 7 und den Seitenwänden 8, 9 ist jeweils im Bereich der Kopfausnehmungen 5 eine Ansatznase 22 für ein in der Fig. 2 dargestelltes Klemmteil 23 geformt.

Das in der Fig. 2 isometrisch dargestellte Klemmteil 23 weist zwei Kontaktflächen 24 auf. Die Kontaktflächen 24 erstrecken sich im Wesentlichen geradlinig und parallel zueinander. Die Kontaktflächen 24 sind an zwei gegenüberliegenden Seiten einer Durchgangsöffnung 25 für den Clip 1 angeordnet. Das Klemmteil 23 weist ferner zwei Federn 26 auf, die seitlich zur Durchgangsöffnung 25 angeordnet sind. Die Federn 26 sind an denselben Seiten angeordnet wie die Kontaktflächen 24. Die Federkraft der Federn 26 wirkt in Richtung der Richtung der Durchgangsöffnung 25. Das Klemmteil 23 weist ferner zwei Haltemittel 27 auf, die jeweils zwei Nasen 28 aufweisen.

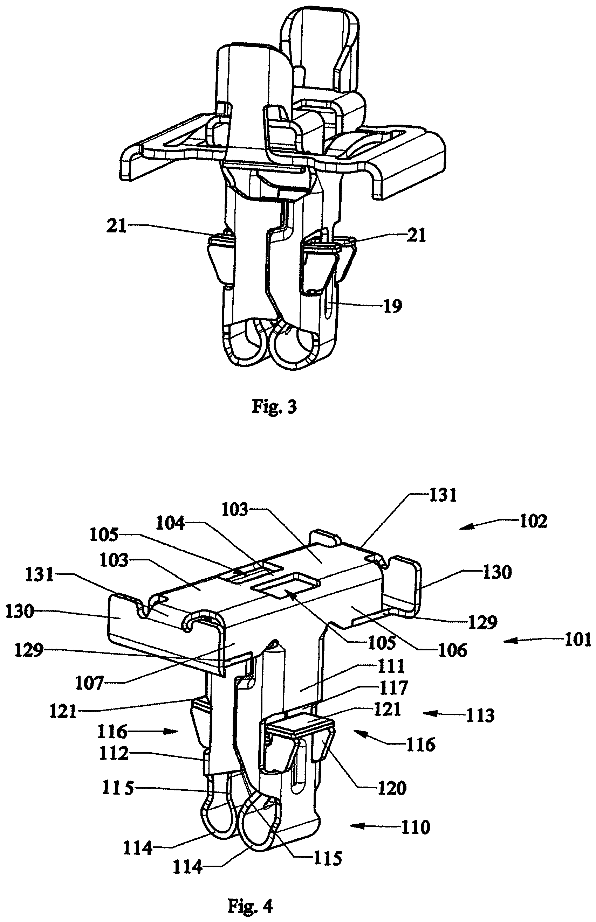

In Fig. 3 ist gezeigt, wie der Clip 1 mit dem Klemmteil 23 verbunden ist. Der Clip 1 erstreckt sich mit seinem Schaft 13 durch die Durchgangsöffnung 25 und die Ansatznasen 22 sind mit ihrer Oberseite mit der Unterseite der Federn 26 verschweißt. Die Nasen 28 der Haltemittel 27 sind in Eingriff mit den Kopfstegen 3 des Kopfes 2 des Clips 1. Die Nasen 28 drücken den Clip 1 entgegen der Federkraft der Federn 26 entlang der Längsachse des Schaftes 13 in Richtung des Fußbereichs 10.

Die Fig. 3 zeigt die Vorrichtung zum Halten eines Bauteils in einer ersten Position des Kopfes 2 relativ zu den Kontaktflächen 24. Mittels der Federn 26 ist der Kopf 2 relativ zu den Kontaktflächen 24 vorgespannt und durch Verringern der Vorspannung (zumindest teilweise Relaxation) der Federn 26 ist der Kopf 1 relativ zu den Kontaktflächen 24 bewegbar. Die Haltemittel 27, welche lösbar ausgestaltet sind, halten den Kopf 2 in der ersten Position (Fig. 3) relativ zu den Kontaktflächen 24, wobei die Federn 26 in einer Richtung verformt sind, in der die Vorspannung vergrößert ist, wenn der Kopf 2 in dieser ersten Position im Vergleich zu einer zweiten, nicht dargestellten Position ist, die der Kopf 2 relativ zu den Kontaktflächen 24 einnehmen kann.

Werden die Haltemittel 27 mit den Nasen 28 außer Eingriff mit dem Kopf 2 bzw. den Kopfstegen 3 des Clips 1 gebracht, so kontaktieren die Haltemittel 27 den Kopf 2 nicht länger und halten ihn auch nicht mehr in der in Fig. 3 dargestellten Position. Das Haltemittel 27 kann in eine Freigabeposition bewegt werden, in der der Kopf 2 zusammen mit dem Schaft 13 und den Clipflächen 21 in Richtung auf die Kontaktflächen 24 bewegt wird, um die Klemmkraft zwischen Clipflächen 21 und den Kontaktflächen 24 auszuüben.

Um eine symmetrische Klemmkraft zu erzeugen, sind die Clipflächen 21 und die Kontaktflächen 24 jeweils symmetrisch zur Durchgangsöffnung 25 bzw. dem Schaft 13 angeordnet.

Die Figuren 4 bis 6 zeigen eine weitere Ausführungsform der erfindungsgemäßen Vorrichtung. Bei der weiteren Ausführungsform werden Bauteile, die in ihrer Funktion Bauteilen aus der in den Figuren 1 bis 3 dargestellten Ausführungsform gleichen, mit gleichen Bezugszeichen, die um den Wert 100 erhöht sind, gekennzeichnet. Im Folgenden wird die zweite Ausführungsform im Wesentlichen bezüglich ihrer Unterschiede zur ersten Ausführungsform beschrieben.

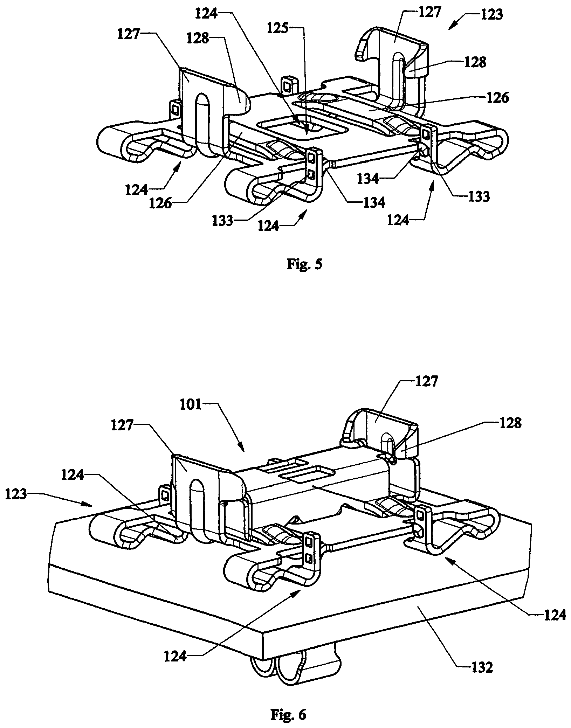

Wie der Fig. 4 zu entnehmen ist, weist der Clip 101 der zweiten Ausführungsform keine Ansatznasen zur Befestigung des Klemmteils 123 auf. Der Clip 101 der zweiten Ausführungsform weist zwei Auflageflächen 129 auf, die auf dem Klemmteil 123 aufliegen (Fig. 6). Die Auflageflächen 129 erstrecken sich senkrecht zu den Seitenwänden 106, 107 und sind dem Fußbereich 110 des Clips 1 zugewandt. Die Auflageflächen 129 erstrecken sich bis unter das U-förmige Profil der Kopfstege 103 mit den Seitenwänden 106, 107, wodurch eine Stabilisierung erreicht werden kann. Die Auflagefläche 129 liegt an den Enden der Schenkel des U-förmigen Profils an. Die Auflageflächen 129 sind jeweils über eine Auflageseitenwand 130 und einen Abwinklungssteg 131 mit den Kopfstegen 103 verbunden. Die Auflagefläche 129 weist zur Auflageseitenwand 130 eine Biegung um ungefähr 90° auf. Der Abwinklungssteg 131 zwischen Kopfsteg 103 und Auflageseitenwand 130 ist derart gebogen, dass zwischen dem Kopfsteg 103 und der Auflageseitenwand 130 ein Winkel von ungefähr 90° vorliegt.

Die Vorsprünge 116 auf der Seite eines Schaftarms 111, 112 sind hinsichtlich ihrer Clipfläche 121 verbunden. Es ergeben sich vergrößerte Fenster 117, die in den Schaftarmen 111, 112 geformt sind und den Mittelsteg der ersten Ausführungsform nicht aufweisen.

Das in der Fig. 5 isometrisch dargestellte Klemmteil 123 weist zwei Federn 126 auf, auf denen die Auflageflächen 129 zumindest teilweise aufliegen. Die Haltemittel 127 halten den Clip 101 mittels eines Eingriffs der Nasen 128 an den Auflageseitenwänden 130 in Vorspannung (vgl. Fig. 6). Das Haltemittel 127 weist zwischen den Nasen 128 eine Haltemittelsicke zur Stabilisierung des Haltemittels 127 auf.

Der Klemmteil 123 weist vier Kontaktflächen 124 auf, die gebogen sind und deren Biegungsradius quer zur Flächennormalen des zu haltenden Bauteils 132 (vgl. Fig. 6) und quer zur Längsachse des Schafts 113 des Clips 101 verläuft. Die vier Kontaktflächen 124 sind symmetrisch am Klemmteil 123 und zur Vorrichtung bezogen auf die Längsachse des Schafts 113 ausgebildet. Die Kontaktflächen 124 sind an einem Ende in eine Richtung ungefähr parallel zur Längsachse des Schafts 113 umgebogen und weisen eine Durchbrechung 133 in diesem sich parallel zur Längsachse des Schaftes 113 erstreckenden Bereichs auf, die zur Stabilisierung von einem Stabilisierungsabschnitt 134 des Klemmteils 23 zumindest teilweise durchgriffen wird.

Die in den Figuren dargestellten beiden Ausführungsformen sind hinsichtlich der Anordnung der Kontaktflächen, der Ausgestaltung der Kontaktflächen, der Verbindung von Klemmteil und Clip, Anordnung der Haltemittel relativ zu der Feder und Anordnung der Feder des Klemmteils relativ zu der Clipfläche austauschbar und kombinierbar, ohne dass sich Einschränkungen hinsichtlich der Funktionalität ergeben.

## Patentansprüche

1. Vorrichtung zum Halten eines Bauteils, wobei die Vorrichtung einen Clip (1; 101) umfasst, wobei der Clip (1; 101) einen Kopf (2; 102) und eine oder mehrere Clipflächen (21; 121) für eine Anlage an dem zu haltenden Bauteil oder einem Element, an dem das Bauteil gehalten werden soll, umfasst, wobei die Clipfläche (21; 121) dem Kopf (2; 102) zugewandt und zum Kopf (2; 102) beabstandet ist, wobei die Vorrichtung ein Klemmteil (23; 123) umfasst, das den Kopf (2; 102) von der Seite des Kopfes (2; 102), der der Clipfläche (21; 121) zugewandt ist, unterstützt oder das mit dem Kopf (2; 102) verbunden ist, wobei das Klemmteil (23; 123) eine Kontaktfläche (24; 124), die der Clipfläche (21; 121) zugewandt ist, aufweist und ferner die Vorrichtung eine Feder (26; 126) umfasst, die derart angeordnet ist, um die Kontaktfläche (24; 124) vom Kopf (2; 102) weg in Richtung der Clipfläche (21; 121) vorzuspannen, **gekennzeichnet durch** ein lösbares Haltemittel (27; 127), das den Kopf (2; 102) in einer ersten Position relativ zur Kontaktfläche (24; 124) hält, wobei die Feder (26; 126) in einer Richtung verformt ist, in der die Vorspannung vergrößert ist, wenn der Kopf (2; 102) in dieser ersten Position im Vergleich zu einer zweiten Position ist, die der Kopf (2; 102) relativ zu der Kontaktfläche (24; 124) einnehmen kann.

2. Vorrichtung nach Anspruch 1, **dadurch gekennzeichnet, dass** der Kopf (2; 102) relativ zur Kontaktfläche (24; 124) bewegbar ist durch Verformen der Feder (26; 126) in einer Richtung, in der die Vorspannung vergrößert ist.

3. Vorrichtung nach Anspruch 2, **dadurch gekennzeichnet, dass** das Haltemittel (27; 127) eine Nase (28; 128) aufweist, die von einer Kontaktposition, in der sie den Kopf (2; 102) kontaktiert und den Kopf (2; 102) in der ersten Position hält, in eine Freigabeposition, in der sie den Kopf (2; 120) nicht länger hält, bewegbar ist.

4. Vorrichtung nach einem der Ansprüche 1 bis 3, **dadurch gekennzeichnet, dass** der Clip (1; 101) einen Schaft (13; 113) hat, und dass der Kopf (2; 102) mit dem Schaft (13; 113) verbunden ist, und dass der Schaft (13; 113) einen Vorsprung (16; 116) aufweist, wobei die Clipfläche (21; 121) eine Fläche auf dem Vorsprung (16; 116) ist.

5. Vorrichtung nach einem der Ansprüche 1 bis 4, **dadurch gekennzeichnet, dass** der Klemmteil (23; 123) zwei voneinander beabstandete Federn (26; 126) aufweist, die derart angeordnet sind, um die Kontaktfläche (24; 124) von dem Kopf (2; 102) weg in Richtung auf die Clipfläche (21; 121) vorzuspannen.

6. Vorrichtung nach einem der Ansprüche 1 bis 5, **dadurch gekennzeichnet, dass** der Clip (1; 101) lösbar an dem Klemmteil (23; 123) befestigt ist.

7. Vorrichtung nach einem der Ansprüche 1 bis 6, **dadurch gekennzeichnet, dass** mehr als eine Kontaktfläche (24; 124) vorgesehen ist, die im Wesentlichen symmetrisch in Bezug auf einen Teil des Clips (1; 101) angeordnet sind.

8. Vorrichtung nach einem der Ansprüche 1 bis 7, **dadurch gekennzeichnet, dass** vier Kontaktflächen (24; 124) vorgesehen sind.

9. Vorrichtung nach einem der Ansprüche 1 bis 8, **dadurch gekennzeichnet, dass** der Clip (1; 101) einstückig aus einem Metallblech erzeugt ist, wobei Abschnitte des Metallblechs relativ zueinander gebogen sind, um dem Clip (1; 101) seine dreidimensionale Form zu geben, und/oder dass das Klemmteil (23; 123) einstückig aus einem Metallblech erzeugt ist, wobei Abschnitte des Metallblechs relativ zueinander gebogen sind, um dem Klemmteil (23; 123) seine dreidimensionale Form zu geben.

10. Vorrichtung nach Anspruch 9, **dadurch gekennzeichnet, dass** das Klemmteil (23; 123) einstückig aus einem Metallblech erzeugt ist, wobei Abschnitte des Metallblechs relativ zueinander gebogen sind, um dem Klemmteil (23; 123) seine dreidimensionale Form zu geben, und dass das Haltemittel (27; 127) einen aufwärts gebogenen Teil eines Metallblechs umfasst, der den Kopf (2; 102) des Clips (1; 101) überragt, wobei der aufwärts gebogene Teil des Metallblechs eine nach innen gebogene Nase (28; 128) aufweist, die den Kopf (2; 102) kontaktiert und den Kopf (2; 102) in einer ersten Position hält.

## Claims

1. Device for holding a component, the device comprising a clip (1; 101), and the clip (1; 101) comprising a head (2; 102) and one or more clip surfaces (21; 121) for contacting the component to be held or an element on which the component is to be held, wherein the clip surface faces (21; 121) the head (2; 102) and is spaced at a distance from said head (2; 102), and wherein the device comprises a clamping part (23; 123) which supports the head (2; 102) from the head (2; 102) side facing the clip surface (21; 121) or is connected to the head (2; 102), wherein the clamping part (23; 123) has a contact surface (24; 124) which faces the clip surface (21; 121) and wherein the device further comprises a spring (26; 126) which is arranged so as to pre-tension the contact surface (24; 124) away from the head (2; 102) in the direction of the clip surface (21; 121) **characterized by** a releasable retaining means (27; 127), which holds the head (2; 102) in a first position relative to the contact surface (24; 124), wherein the spring (26; 126) is deformed in a direction in which the pre-tension is increased if the head (2; 102) is in this first position by comparison with a second position which the head (2; 102) can adopt relative to the contact surface (24; 124).

2. Device according to claim 1, **characterized in that** the head (2; 102) can be moved relative to the contact surface (24; 124) by deforming the springs (26; 126) in a direction in which the pre-tension is increased.

3. Device according to claim 2, **characterized in that** the retaining means (27; 127) has a lug (28; 128) which can be moved from a contact position, in which it contacts the head (2; 102) and holds the head (2; 102) in the first position, into a release position in which it no longer holds the head (2; 120).

4. Device in accordance with one of the claims 1 to 3, **characterized in that** the clip (1; 101) has a shank (13; 113) and that the head (2; 102) is connected to the shank (13; 113), and that the shank (13; 113) has a projection (16; 116), wherein the clip surface (21; 121) is a surface on the projection (16; 116).

5. Device in accordance with one of the claims 1 to 4, **characterized in that** the clamping part (23; 123) has two springs (26; 126) located at a distance from one another which are arranged in such a manner as to pre-tension the contact surface (24; 124) away from the head (2; 102) in the direction of the clip surface (21 ; 121).

6. Device in accordance with one of the claims 1 to 5, **characterized in that** the clip (1; 101) is mounted releasably on the clamping part (23; 123).

7. Device in accordance with one of the claims 1 to 6, **characterized in that** more than one contact surfaces (24; 124) are provided which are arranged substantially symmetrically in respect of a part of the clip (1; 101).

8. Device in accordance with one of the claims 1 to 7, **characterized in that** four contact surfaces (24; 124) are provided.

9. Device in accordance with one of the claims 1 to 8, **characterized in that** the clip (1; 101) is produced from a metal sheet as a single piece, wherein sections of the metal sheet are bent relative to one another to give the clip (1; 101) its three-dimensional shape, and/or that the clamping part (23; 123) is produced from a metal sheet as a single piece, wherein sections of the metal sheet are bent relative to one another to give the clamping part (23; 123) its three-dimensional shape.

10. Device according to claim 9, **characterized in that** the clamping part (23; 123) is produced from a metal sheet as a single piece, wherein sections of the metal sheet are bent relative to one another to give the clamping part (23; 123) its three-dimensional shape, and that the retaining means (27; 127) comprises a part of a metal sheet that has been bent upwards and projects beyond the head (2; 102) of the clip (1; 101), wherein the upwards bent part of the metal sheet has an inwards bent lug (28; 128) which is in contact with the head (2; 102) and holds the head (2; 102) in a first position.

## Revendications

1. Dispositif pour maintenir un composant, le dispositif comprenant un clip (1 ; 101), le clip (1 ; 101) comprenant une tête (2 ; 102) et une ou plusieurs surfaces de clip (21 ; 121) pour une installation sur le composant à maintenir ou un élément sur lequel le composant doit être maintenu, la surface de clip (21 ; 121) étant orientée vers la tête (2 ; 102) et espacée de la tête (2 ; 102), le dispositif comprenant une pièce de serrage (23 ; 123) qui supporte la tête (2 ; 102) du côté de la tête (2 ; 102) qui est orienté vers la surface de clip (21 ; 121) ou qui est reliée à la tête (2 ; 102), la pièce de serrage (23 ; 123) présentant une surface de contact (24 ; 124) orientée vers la surface de clip (21 ; 121) et le dispositif comprenant également un ressort (26 ; 126) qui est disposé de sorte à précontraindre la surface de contact (24 ; 124) en s'éloignant de la tête (2 ; 102) en direction de la surface de clip (21 ; 121) **caractérisé en** un moyen de retenue (27 ; 127) détachable qui maintient la tête (2 ; 102) dans une première position par rapport à la surface de contact (24 ; 124), le ressort (26 ; 126) étant déformé dans une direction dans laquelle la précontrainte est accrue lorsque la tête (2 ; 102) est dans cette première position par rapport à une deuxième position que peut prendre la tête (2 ; 102) par rapport à la surface de contact (24 ; 124).

2. Dispositif selon la revendication 1, **caractérisé en ce que** la tête (2 ; 102) peut être déplacée par rapport à la surface de contact (24 ; 124) par déformation du ressort (26 ; 126) dans une direction dans laquelle la précontrainte est accrue.

3. Dispositif selon la revendication 2, **caractérisé en ce que** le moyen de retenue (27 ; 127) présente un bec (28 ; 128) qui est déplaçable d'une position de contact, dans laquelle il est en contact avec la tête (2 ; 102) et maintient la tête (2 ; 102) dans la première position, dans une position de dégagement dans laquelle la tête (2 ; 120) n'est plus maintenue.

4. Dispositif selon l'une quelconque des revendications 1 à 3, **caractérisé en ce que** le clip (1 ; 101) est doté d'une tige (13 ; 113) et **en ce que** la tête (2 ; 102) est reliée à la tige (13 ; 113) et **en ce que** la tige (13 ; 113) présente une saillie (16 ; 116), la surface de clip (21 ; 121) étant une surface sur la saillie (16 ; 116).

5. Dispositif selon l'une quelconque des revendications 1 à 4, **caractérisé en ce que** la pièce de serrage (23 ; 123) présente deux ressorts (26 ; 126) espacés l'un de l'autre qui sont disposés de sorte à précontraindre la surface de contact (24 ; 124) en s'éloignant de la tête (2 ; 102) en direction de la surface de clip (21 ; 121).

6. Dispositif selon l'une quelconque des revendications 1 à 5, **caractérisé en ce que** le clip (1 ; 101) est fixé de manière amovible sur la pièce de serrage (23 ; 123).

7. Dispositif selon l'une quelconque des revendications 1 à 6, **caractérisé en ce que** plus d'une surface de contact (24 ; 124) est prévue, surfaces de contact qui sont disposées de manière essentiellement symétrique par rapport à une partie du clip (1 ; 101).

8. Dispositif selon l'une quelconque des revendications 1 à 7, **caractérisé en ce que** quatre surfaces de contact (24 ; 124) sont prévues.

9. Dispositif selon l'une quelconque des revendications 1 à 8, **caractérisé en ce que** le clip (1 ; 101) est fabriqué en une pièce en tôle métallique, les sections de tôle métallique étant courbées les unes par rapport aux autres afin de donner au clip (1 ; 101) sa forme tridimensionnelle, et/ou **en ce que** la pièce de serrage (23 ; 123) est fabriquée en une pièce en tôle métallique, les sections de tôle métallique étant courbées les unes par rapport aux autres afin de donner à la pièce de serrage (23 ; 123) sa forme tridimensionnelle.

10. Dispositif selon la revendication 9, **caractérisé en ce que** la pièce de serrage (23 ; 123) est fabriquée en une pièce en tôle métallique, les sections de tôle métallique étant courbées les unes par rapport aux autres afin de donner à la pièce de serrage (23 ; 123) sa forme tridimensionnelle et **en ce que** le moyen de retenue (27 ; 127) comprend une partie courbée vers le haut d'une tôle métallique, partie qui dépasse la tête (2 ; 102) du clip (1 ; 101), la partie courbée vers le haut de la tôle métallique présentant un bec (28 ; 128) courbé vers l'intérieur qui est en contact avec la tête (2 ; 102) et maintient la tête (2 ; 102) dans une première position.
